# EUROPEAN PATENT APPLICATION

(11) **EP 1 317 124 A1**
(43) Date of publication of application: **04.06.2003**
(21) Application number: 01128348.8
(22) Date of filing: 30.11.2001
(51) Int. Cl.: H04N 1/00, H04N 1/32

(54) **Image data improvement for wireless transmitted digital image data**

(71) Applicant: GRETAG IMAGING Trading AG, 5430 Wettingen (CH)
(72) Inventor: Näf, Markus, 8032 Zürich (CH); Nussbaumer, Marc, 8008 Zürich (CH)
(74) Representative: Schwabe - Sandmair - Marx

(57) **Abstract**

The present invention is related to a method for improving digital image data recorded by a kind of mobile phone which is assembled with an image recording portion, wherein the recorded images are send to a image transaction device for modifying the image data, said modified image data being recorded e.g. on print paper with improved image characteristics.

## Description

The present invention is directed to a method for improving digital image data recorded by a mobile imaging data recording/transmitting device (MIRT device), e.g. a mobile phone which image data receiving and transmitting functions, wherein an image is received by an image receiving portion of said mobile data transmitter device; wherein said image is transferred into digital image data to be transmitted; wherein said transmitted digital image data are received by a receiving device, in accordance with claim 1.

In the prior art, it is known to provide and use mobile phones including an image recording portion to transmit the current image of the speaker and user of the corresponding mobile phone. The image data are transmitted through a wireless channel and are received at a receiving mobile phone so that the other party of a telephone conversation is able to see the partner of the telephone conversation on a screen, e.g. an LCD screen.

Of course, it would also be possible to record other images than only the user of the corresponding mobile phone. However, usually the lens portion of a mobile phone is designed by means of inexpensive components and thus, the image quality is pour rather than acceptable as far as these image data are intended to produce photo prints or the like.

It is an object of the present invention to provide a method which provides processed and improved digital image data which are worth to be recorded on photo print paper, on photo-CDs, or the like.

Furthermore, it is an object of the present invention to provide method which is able to provide modified image data, which are modified in a particular manner, for instance, to superimpose the digital image data with available data or the like.

It is a further object of the present invention to provide a method according to which digital image data can be modified by supplementing these image data with supplementary image data.

It is another object of the present invention to provide a system which is convigured to be able to solve the above objects.

In additon, it is an object to provide technical software which can be used to control hardware to accomplish the above objects at least partially.

According to the present invention, the digital image data to be transmitted are intermediately transmitted to an image transaction device (ITD) for modifying the image data. After the modification of the digital image data, the image data are received by a receiving device and are recorded, for instance on print paper by means of a photo printer, on a data storage device, like a photo-CD or the like.

Thus, according to the invention it is possible to improve the image quality of image data which have been captured by means of an optical arrangement of low quality. Of course, it is also possible to connect a digital camera to a mobile image data recording/transmitting device, e.g. a mobile phone optical and/or digital image capturing portion and to send image data from the camera via the mobile phone through an digital data modifying device to an image recording apparatus, like a photoprinter or the like.

Also in this letter case, it is still possible to improve the digital image data stamming from the integrated memory device of a digital camera, wherein it is possible to send the huge amount of image data via a wireless transmission channel. In this case, a customer is able to order high quality photo prints or the like without the necessity to go to a photo shop to order the photoprints personally.

According to the invention, it is possible to improve the digital image data to be recorded by means of one or several image quality improving processes, causing contrest improvements, light density improvements, colour density improvements, colour corrections, read-eye corrections or the like.

The above referenced documents are included in the present disclosure by reference.

According to one advantageous embodiment, when a connection between the MIRT device and the ITD device is arranged, the ITD device sends at least one set of digital data including at least one of the following subsets of data:
- At least one application data filed for the application of a user;
- at least one service providing data field for selecting a service by the user;
- at least one location identification data field for the identification of service target location;
- at least one user identification data field for enabling a user to identify himself;
- at least one user billing identification data field for enabling a user to provide billing data.

The above listed subsets are necessary to deal with all items necessary to transmit digital image data, order records of the image data, for instance photoprint-outs of the images, and to handle the exchange of money and products between the service provider and the customer.

According to another embodiment of the invention it is sensible to provide the set of digital data or at least one of the subsets in the shape of a voice data field or, on the other hand, as a voice and/or image data field, in particular at least one interactive mask data field. Accordingly, the customer is in the position to provide billing data, personal data, like the address where photoprint-outs could be send to, and/or other data with ease and without any considerable risk to make mistakes.

According to another embodiment of the invention, when the transmission of digital image data is disturbed and/or interrupted, the ITD transmits a signal to the MIRT device to at least partially repeat the transmission or reinitiate the transmission. Accordingly, the ITD desides whether an image data transmission has been concluded successfully and without any considerable errors and is able to send an OK-status signal to the MIRT device to confirm that the deal between the customer and the service provider who runs the ITD device is firm.

According to another embodiment of the present invention, the MIRT device records and/or transmits a particular image to the ITD and the MIRT device and/or the ITD device, respectively, are linking proof information with respect to a time and/or a day and/or a location with the image data to be recorded, indicating the time/date/location of capturing of the particular image by the MIRT device and/or the time/date of receiving the image data by the ITD device, respectively. This very important feature enables a customer to capture an image of an event and to use this image as a proof which covers a kind of certification. Accordingly, it is possible that a journalist takes a picture of an event and transmits the picture nearly at the same time to the ITD device of the invention to certify the time and data of capturing to be able to prove the autenticity of an event to be able to report this event in the next issue of a newspaper or journal. The same applies, for instance, for accidents or the like. It is also possible to include a water mark in a print-out of an image which has to be used as a proof.

Furthermore, it is possible to store the image information which image information is to be used a proof information for a certain time period on a secure server memory, which server memory is not acceptable to manipulation. Accordingly, a customer would be able to re-order a proof in the form of a certified print out of an image within a predetermined time period after the transmission of the image data to the ITD device.

According to one advantageous embodiment, the MIRT device can also include an activation means for activating an automatic image data transmission and/or modification and/or recordation, wherein this activation means can be provided as a push button or the like. This means, if the customer activates a push button on the mobile phone, the mobile phone sends all image data stored in an image data memory to a particular address or phone number to be processed and modified in accordance with the present invention. This push-button in principle can activate the control means for the automatic transmission of the image data.

According to another embodiment of the invention, the digital image data can be combined with supplementary data, and a combined data can be recorded. For instance, it is possible that the customer transmits digital image data from his mobile phone (MIRT device) choosing a particular service, for instance a photo book service and the image data are printed out on paper which already shows image frames like a usual photo album or the like. In addition, it is possible to combine personal images with images of a particular event, location or the like to be printed out in combination. For instance, if a customer goes to a car racing event, he is able to chose supplementary data like images of famous pilots of racing cars, images of racing cars, and the like with his personal image data. This supplementary image data would be provided by a service provider who would be allowed to charge the customer for providing the image data.

According to another embodiment which is in accordance with the invention, the MIRT device transmits a service order and digital image data to the ITD device and corresponding to a billing rate for the service order, the ITD device transmits billing data to the MIRT device, particularly for confirmation purposes. Accordingly, a customer is free to confirm a service order or to cancel a service order if the billing rate, i.e. the costs for providing e.g. photoprint-outs, are agreeable for him.

According to another advantageous embodiment, it is possible to charge a prepaid card, e.g. a SIN-card with the amount of money which has to be incurred for a particular service.

Furthermore, it is possible to transmit customer account identifications after the confirmation of deal between the customer and the service provider. Accordingly, the ITD device is able to varify whether given electronic account identifications are valid or not and can accomplish electronic payment actions on the basis of the transmitted account identification data. After a electronic payment actions have been completed the ordered service can be completed.

On the other hand, it is possible to store a customer identification in a memory of a mobile phone (MIRT device) which identification is related to customer data being stored in the ITD device. Accordingly, always if a service order is received by the ITD device, it is possible to charge a customer which can be identified by means of the respective customer identification data.

A corresponding system as well as corresponding control software are also covered by the present invention. Accordingly, claims directed to such hardware components can also be worded on the basis of the present disclosure.

In the following, the present invention will be explained in more detail in the following specification which refers to the accompanying drawings, in which:
- Fig. 1: shows a principle scene of the present invention;
- Fig. 2: shows a diagram including basic components or steps necessary to accomplish the invention;
- Fig. 3: is a more detailed scene showing several stages and wireless data channels of the method of the present invention;
- Fig. 4: shows another scene including several stages and wireless data channels related to the method of the present invention;
- Fig. 5: shows another scene which is in accordance with one embodiment of the invention; and
- Fig. 6: a further advanced embodiment of the present invention by means of a operational scene.

One aspect of the invention is a concept to act as a wireless application service provider (WASP) and WASP aggregator with a focus on imaging applications and output services.

This aspect of the invention includes at least some of the following steps and/or stages.
- The image enhancement for mobile terminals is one relevant sub-aspect. Mobile terminals will use low-end imaging sensors with low-end optics to capture images. The units will be operated mostly in uncontrolled environments, which will result to a large extend in images, far away from a perfect quality. Gretag Imaging has been confronted with this fact since many years and has therefore invested in image enhancement algorithms that can partially compensate the above mentioned factors. These algorithms will be optimised for mobile terminals and licensed to the terminal manufacturers.
- Network services and applications are one further important sub-aspect of this invention.
   A major element in the supply is the ITS (Image Transaction Service). It is the connecting element between different market participants, supply directories, routing and clearinghouse services all together or at least of which representing components of the method of this invention. A major difference from other players in this market is open application integration and an open data integration interface. This allows the fast integration of a broad service supply and gives the basis for a viral marketing approach to the application and database providers. In order to start ITS and prove the viability of the concept, we will implement a selected range of applications ourselves.
- The Output network for the image output is an additional, important sub-aspect of the invention
   Most of all mobile players focus on soft image only environments without inclusion of image printing. We see this as a major opportunity to expand the market from the photofinisher corner. We help the well established world-wide photofinisher community to access a new market through ITS and innovative applications.

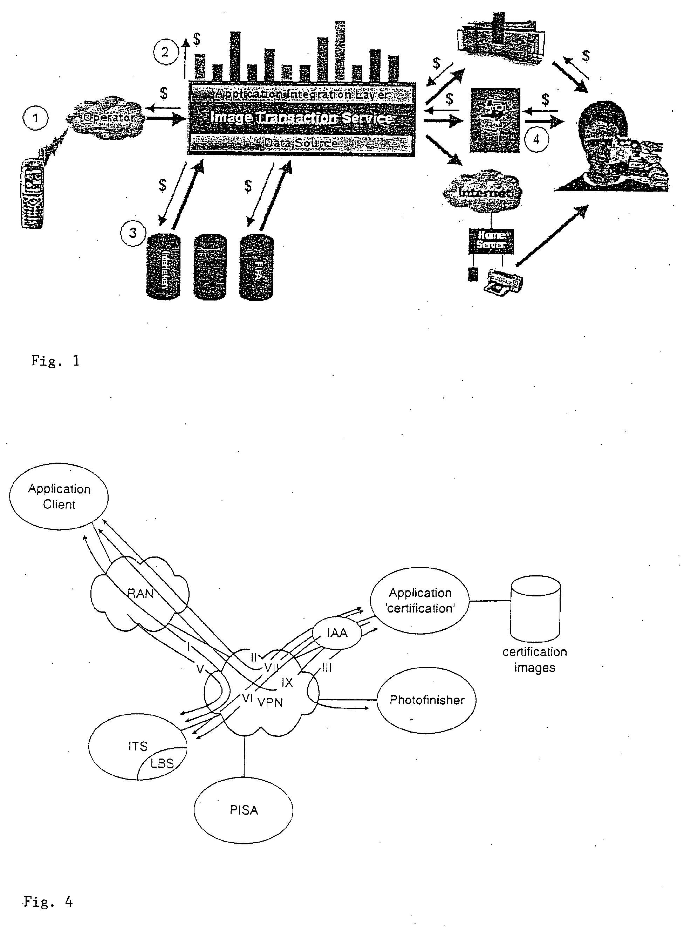

Given this concept according to this aspect of the invention, which can be seen in Fig. 1, it is possible to highlighten four different applications. The motivations for these applications to enter mobile imaging are as follows:
- For mobile terminal manufacturers (image enhancement), it is sensible to improve the attractiveness of handsets (mobile imaging as new feature). A high image quality is important for consumer satisfaction.
- For mobile network operators, it is advantageous to use billing systems and billing relationship with end-customer to expand the service volume. In addition it is possible to stimulate data traffic on 2.5G/3G networks, i.e. to stimulate the distribution of mobile high speed networks.
- For photofinishing services, the invention is also promising since it is possible to offer new products with high margins and to maximise the capacity utilisation of the digital printing infrastructure.
- In addition it is possible to provide additional services which are not yet accessible, for instance application and content data to be combined with customer image data. It is possible to offer a platform for world-wide market access and to provide and distribute existing digital content (only content providers).

The end-customer billing could be done e.g. via mobile network operator (phone bill) or via photofinisher, using existing billing systems. The ITS acts then as a clearing house and splits the revenue between operator, application provider, content provider and photofinisher.

The Image Transaction Service and the Output Network are important parts of the technical infrastructure that enables our mobile imaging concept. Additionally, we will provide the following applications:
- PISA (Personal Image Space Anywhere)
   The PISA enables users to store, access and share images anytime anywhere, independent of the device they are using (mobile phone, PDA, PC, interactive TV etc.). hey can also order prints from images stored in PISA.
- Frame Applications
   Frame applications have one thing in common: They allow users to combine their own images with third party content displayed in the frame of the printed photo. An example is the personalised postcard where tourists can take a picture with their mobile phone and add a nice background to their image (e.g. the "Matterhorn"; the offered background from a database depends on the location, i.e. GSM cell, of the user) and send it as a postcard.
- Book Applications
   Similar to the frame applications, book applications allow the combination of photos with content from content providers. The photos and other digital content is printed on photo paper with book-format. An example is the event book where event visitors (e.g. in a Tina (Turner concert) can take pictures and combine them with pictures of the show and other digital content (e.g. text of the songs).
- Certification The certification application allows the certified capturing of a moment (Image, time and location are certified.) via imaging-enabled mobile phone. The certified digital image can be archived or printed. We offer four levels of certification: - Consumer/Fun: A fake certificate that consumers can use for fun - Consumer/Proof: A real certificate that is legally accepted, e.g. for dealing with insurance after a car a accident - Business/Proof: Same as consumer/proof, but with more accurate time and location information - Business/Customized services: Customer specific business solutions.

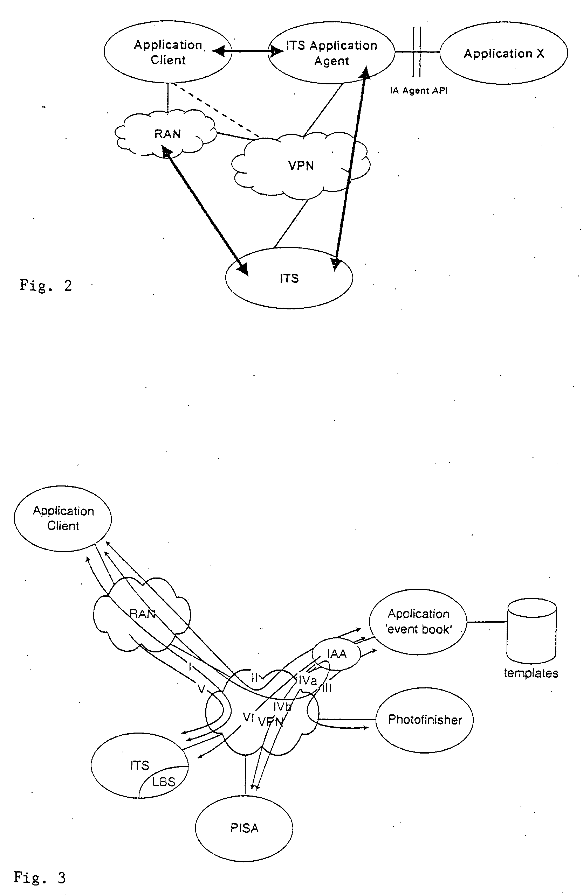

In the following, the corresponding aspect of the invention is described with reference to Fig. 2.

Time-to-market is one of the most critical success factors in the mobile market. This invention shall enable application providers to deploy new applications into the mobile world in a fast manner without the difficulties and complexity of integration with one or more MNOs. This goal is achieved through the interaction of the three basic elements of the application framework: the application client, the ITS and the ITS application agent.

Whereas the ITS provides an abstract interface to the MNO, the ITS Application Agent hides the complexity of interaction with the ITS. The result is a simple and fast way for application providers to make their applications ready for the mobile world and to leverage the MNO's billing system.

The ITS application agent (IA Agent) is the interface to the ITS for all applications and to the application client. It represents a logical session of the application server with a client and offers some additional functions like billing information, location information, image format transformation ecc. The application client (AC) is either directly connected to the VPN (dashed line) or over the MNO's radio access network (e.g. over GPRS). The AC initially only knows the ITS from where it gets a list of all available applications. The ITS therefore acts as a portal. Once a session with the selected application has been set up, the AC communicates directly with the IA Agent of that application in order to take the load away from the ITS.

For the application client the key limiting factors for the functionality of a mobile device are the memory, the battery life, the power consumption and the CPU. Due to these limitations the application client, e.g. a software package, needs to be as simple as possible.

Another key success factor is the distribution application of the client. The application client should run on most if not all mobile terminals without requiring modifications.

Having in mind the latest developments and trends in device technologies, three of them seem to have the potential to serve as a good foundation for the application client software and/or control algorithms..

### 1. Messaging Systems

It is likely that the huge success of SMS today will continue with the introduction of next generation messaging systems, i.e. EMS and MMS. The messages can be used both as a communication means from the user to the application server and for the delivery of the application results from the server back to the user. Already today some info services (e.g. diax info kiosk) have been based on SMS. MMS will provide a much more flexible and larger container than SMS does today. MMS will also provide a much more flexible way to present messages using the WK standard SMIL (Synchronised Multimedia Integration Language).

The advantage of using Messaging Systems is their widespread availability and simplicity. The disadvantage is the limited user interaction, which makes messaging systems more, suited for atomic applications. Another disadvantage is that the users need to know the service numbers and commands in advance unless there is a cooperation with the MNO who controls the SIM card.

This is the least flexible solution.

### 2. Microbrowser

Today's microbrowsers come in embedded and non-embedded form. The embedded ones have a smaller footprint. They usually support one of the mark-up standards for mobile devices like c-HTML (from i-mode), HDML or WML. The non-embedded ones are usually found on less limited devices like PDA's and directly support HTML. The new mark-up standard for mobile devices is XHTML and the microbrowsers most likely will support it. XHTML-compatible browsers will also form the basis for the new WAP specification.

These browsers already exist on today's terminals and they will probably be the one application, which is available on every new terminal. Customers are already used to interact with browsers over the Internet. Hence it is also the solution with the flattest learning curve.

Nokia offers a WAP browser in source code, which can be customised for different mobile devices and runs on different operating systems. It can be seen as an example of what functionality will be available on most mobile devices in the near future. The important features, which can be used by the AC, are:
- Cookie support (application state information )
- WMLScript support
- WTAI support which gives access to phone functions
- UAProf (User Agent Profile) support which is needed to customise content to the device type
- WIM (Wireless Identity Module) security functionality

### 3. JAVA

JAVA is one of the key enablers for the Mobile Information Society. The Java 2 Platform, Micro Edition in the CLDC (Connected Limited Device Configuration) with the MIDP (Mobile Information Device Profile) has been specifically designed for all sort of mobile devices. There are also several Java Virtual Machines for mobile devices available, a very well-known one is the KVM from Sun. The MeXe (Mobile Execution Environment) standard relies on Java and will allow the transparent downloads of applications to the mobile terminal in a much similar way as we download today applets over the Internet. In Japan the i-appli services are Javabased. In Europe recent high-end phones (e.g. Nokia Communicator 9210) support Java already today. The problem with implementing Java across mobile devices is that it requires a significant amount of processor speed, storage and power. However the promise of interactivity and richness of content possible with Java is compelling enough for market players to push the standards. However the widespread availability of Java on mobile terminals is still 3-5 years away. Java gives the application provider the greatest flexibility and service integration possibilities.

The first applications will be simple and therefore based on SMS/MMS. Where some more interaction is needed the client applications will be based on the microbrowsers for WAR The content will be in the modularised and XML compatible XHTML mark-up language. XHTML Basic is used for consumer phones and additional XHTML modules can be used for smart phones and high-end devices like the Nokia communicators or PDA's in general. The processing load will be on the server side except for small user interactions, which can be handled by Scripts. In this context MMS will be used to transfer the billable content.

With the advent of 3G mobile phones the client applications will be migrated to Java and be compliant with the MeXe standard, thereby reducing the server load and improving the response time through local processing on the mobile device.

To optimally support different device types, the application content will be adapted using device profiles (UAProf's) as defined in the CC/PP (Composite Capability/Preference Profile) standard. The same framework is used to personalise the applications.

The ITS Application Agent (IAA) The IAA is the mediator between the applications and the rest of the system as represented e.g. in Figures 2 and 3. The design rationale behind putting an agent between the client and the application is the following:
- the agent provides an abstraction mechanism to hide the complexities of integration into the MNO environment from the application. It therefore allows fast development and deployment of new applications.
- the agent manages application sessions
- the agent takes care of content adaptation to different device types
- the majority of processing can be done between the agent and the application in order to reduce the client/server traffic over the scarce radio resources.

The main tasks of ITS are:
1. ITS virtual session management
2. ITS billing interface
3. ITS location information interface
4. ITS customer identification interface
5. Presentation management
6. Foreign application connectivity

### ITS virtual session management

To access the application the application client will connect to the ITS and get a list of available applications. The ITS sets up a virtual session between the client and the application and provides the IAA with a session ID. This session ID is needed to access ITS functionality like billing, retrieving location information and user identity. The application request from the client is then redirected to the application server. Microsoft has just evolved the ASP model in its .NET initiative to ASP.NET and Sun has launched its ONE (Open Network Environment) framework. These frameworks support the notion of web applications and can be used to start an IAA instance, which then represents an application session. Towards the application the IAA is a placeholder for the mobile application client.

The virtual session management implements the following functions:
- setup of the session as described above
- user authentication (subscriber management through ITS)
- managing application state
- recovery of broken sessions due to lost connection
- end-to-end transport security
- send statistical data to ITS (e.g. amount of data transferred for billing control)

### ITS billing interface

Each time the application detects a billable event it uses the ITS billing interface to charge the user of the client application through the ITS. The ITS then generates the charging data for the MNO's billing system.
The ITS billing interface implements the following functionality:
- billing authorisation
- billing transaction creation (session ID, amount, description)
- billing transaction status (confirmed, no credit, failed, ...)

### ITS location information interface

Each time the application needs information about the location of the mobile device it uses the ITS location information interface. The ITS location information interface implements the following functionality:
- location information access authorisation
- location information provisioning (cell ID, zone, co-ordinates)
- location information translation (co-ordinates of city/street name, ...)

### ITS customer identification interface

Each time the application needs information about the customer using the application it uses the ITS customer identification interface. The ITS customer identification interface implements the following functionality:
- IMSI to address translation

### Presentation management

The presentation management module leverages the CC/PP standard to retrieve the mobile device capabilities and the user preferences in order to optimise the application content to save bandwidth usage. In order to minimise the client interaction and to leverage customer relationship the device profile information and the user personalization information is stored together with the customer information on the ITS. Aggregating content before sending it to the client also minimises the number of http requests from the client. The presentation management module implements the following functionality:
- aggregation of content
- personalization: user preferences within and across applications
- content transformation: layout adaptation to display size, image format transformation (size, colour, ...), ...

### Foreign application connectivity

To leverage other applications the IAA offers support for inter application connectivity. To do that a standard scheme like SOAP or JAX/RPC should be used. In the first phase connectivity to the following base applications will be supported:
- PISA: storage, management & retrieval of images in a personalised image store
- Output: setup of print orders e.g. at a photofinisher site
- Messaging: connectivity to a unified messaging system (esp. MMS)

To access a foreign application the IAA implements the following functionality:
- get list of applications from ITS by application type
- remote invocation of a selected foreign application

Note that the billing information is sent directly to the ITS by the foreign application using the same session ID.

According to another aspect of the invention, book applications allow customers to combine own and professional photos and other content into one documentation and have it printed and manufactured as a book, brochure, or the like. The book can replace the traditional photo album and additionally contains third party content. The book can be stored and shared as an online version in PISA, allowing friends and family to order an own copy. An example for a typical book application is the Event Book. People visiting an event, e.g. an open air festival, can take pictures with their imaging-enabled mobile phone, use the book application via mobile internet to add content from bands at the festival and have the book printed and sent home.

Another example for a book application is the Tourist Tour Book. Tourists can make a tour and get a book with (own and third party) pictures and background information of all places visited. The background information and third party pictures are offered based on the GSM cell of the locations of the tourists visit.

At first, the book application's process is presented from a customers point of view by means of a example application, that is the event book application. Afterwards, the technical concept - the architecture and the sequence of actions - is explained more detailed. Thereby, roman numbers denoted in brackets refer to the labeled communication paths in the figure.

For example. the customer visits an event, e.g. an open air festival and takes some photos of this event. A book application provider is present at this event and offers customisable event books. These books may include professional photos of artists and aerial photos of the festival area, as well as information about artists and the festival like tour dates, biography, line-up, festival facts and so on.

The technical concept is described with reference to Fig. 3, wherein the communication between the participating part is shown. There are always two goals to meet. First of all, the number of interactions has to be minimised since there is a non-negligible amount of latency on the mobile net. Secondly, the amount of data transferred from and to the handset has also to be minimised because of limited bandwidth on the mobile net.

In Fig. 3, the different data communication channels are referenced by Roman numbers.

Firstly, the customer connects to the ITS and selects the event book application (I). This may be done through a microbrowser by typing in the URL of the ITS. But there must also be a faster way for people who are already familiar with this service. This could be realised by a specialised URL that is announced on the ticket or a flyer.

The ITS then calls the application which creates an agent (IAA) that is responsible for managing the communication between the application and other collaborators. The application sends a start page through the agent to the client application (II). This start page may include a list of templates, maybe with icons, as well as the number of requested customer images and captions.

The customer uploads the desired images and captions, or sends them by MMS (II). There should also be a possibility to select the images from PISA (IV) instead of selecting them from the mobile itself. See separate PISA interaction description.

The application merges the received images and captions with the selected template (that is stored in a database at the service providers' site). A low-resolution preview may be sent to the MT (II), the high-resolution event book is transferred to the photofmisher. This transfer must also include the customers shipping address that the agent gets from the ITS. This is possible if the customer has subscribed to ITS and enabled the event book service to use his address information (see ITS Subscription Details below). Otherwise, the address has to be requested from the customer, which means that he has to type it in on his tiny little keypad on the MT.

During the whole process, billing information is sent to the ITS (V, VI) and the billable events are only fulfilled if the billing is acknowledged by the ITS. This can be referred to as a billing handshake.

To achieve a further speed up, it should be possible to use this service by sending a simple MMS with all the needed input. This could be reached by advertising the service with flyers containing all information like template previews and the number of images, as well as the short number for the ITS and the keyword for the event book service (cf. today's existing services to request images and ring signals by SMS).

To bring a more sophisticated service to the advanced user there should be a possibility for the user to request previews of the templates and select another photofinisher than the default one.

As mentioned before, the customer should be enabled to browse for images in PISA instead of the local MT memory. To enable the user to browse his images in PISA, the IAA provides the PISA-API to the application. Using this API the application retrieves a list of icons of available images in PISA and retrieves a low-res version of the selected images to send them to the client. The IAA sends only low-resolution previews of the images to the client while the application gets the high-resolution copies of the selected ones.

### The single steps are as follows:

Upon request, the customer selects the desired images by selecting 'select from PISA' instead of 'phone memory'. The client application is then connected to the customer's PISA through the IAA (IVa); the number of required images is transferred.

The PISA presents the different categories and low-resolution previews of the images, enabling the customer to select the required number of images.

After the customer has confirmed his selection, the PISA sends the high-resolution images to the IAA, which forwards them to the application (1Vb).

To keep the user from typing his information e.g. shipping address in each service over and over again, the customer has the possibility to subscribe himself at ITS. With this subscription - the information provided by him - he would be linked to his IMSI with which he is identified. To enable the customer keeping the control, which services may receive this information; the customer must grant this application the access to his record. This may be done as default setting for every application or the application may ask for a one-time grant. Apart from the shipping address, the customer may grant different applications access to other information e.g. position tracking respective positioning.

An application that's quite similar to the one described above is the tourist book application. The major difference is that the templates are not stored at the application's site but distributed on the net. There is a location-based service that determines the template databases that are relevant for the customer's actual position and links them with application. Again, this mechanism is similar to the one that can be found in the postcard application and is therefore explained in this application's section.

There are several items that seem to be critical to successfully run such a service. The aim of this section is to point out these items and to explain why and in which connection they are critical. The items listed below may be considered to a minimum set of requirements that are valid for the most kind of services. Other more sophisticated services may add some items.

First of all, this service needs to be simple for all parties involved. Firstly, it is the customer who connects to the service with a mobile terminal and secondly, there are the service providers. Last but not least, the providers for additional content - e.g. localised templates -must be able to provide their content in the simplest possible way.

This results in the need for a simple but flexible template mark-up language for template descriptions and also a desire for a graphic tool to generate and edit such template descriptions. This tool should offer an easy way to define areas where to put the customer's images and text. Furthermore, a tool or API is required, which takes over the merging of the template with the personalised content that is the customer's images and text.

To avoid that the user has to type in his own shipping address, which isn't very comfortable on mobile terminals, there should be a possibility to get this information from the MNO, or a subscription database at the ITS since the MNO may not have the address of the customers with a prepaid mobile subscription. This results either in a subscription service for the ITS or an API that must be provided by the MNO. For the latter, the customer may have to agree on the MNO's privacy statement to avoid conflicts.

The printing at an off site photofinisher - from the service providers point of view -requires a protocol to exchange the printing information. The service has to inform the photofinisher about the printing size, the number of copies and the shipping address. The photofinisher on the other hand has to transmit the price and maybe some information about the availability and the duration.

To enable the customer to browse and select images on PISA, the IAA and the PISA together must implement this functionality. For PISA, it means to support a browser and a selected functionality, as well as interoperability with the IAA foreign application interface, which must support the PISA connection. Additionally, PISA must support low-resolution and high resolution image transmission. But before an application may have access to PISA, the permission must be checked. Therefore IAA connects to PISA with the actual sessionlD and the customer's IMSI. To verify this identification information, PISA connects to ITS, which is able to validate the sessionlD for this IMSI.

Before a service could be inevitably launched to an extensive test, the test must include a simulation of the wireless part of the communication under different network conditions. Some test environments e.g. Ericsson's GATE support such testing.

One of the most critical parts of the rollout is to get enough content. That means, a partner who runs these services and /or who provides content - either global or localised, which will even be the bigger challenge - must be found and integrated.

Last but not least, a successful service needs enough customers. To get and keep a tight relationship, potential customers must be convinced to subscribe to ITS. To achieve the desired amount of customers, the service must be advertised. Another possibility is to integrate the service in a MNO's portal.

A further aspect of the invention is the image data certification service.

All certification services offer the certified capturing of a moment (image, time, location), archiving and printing. We have four service levels:
- Consumer/Fun
   The user can take a picture with his cell phone and create a certificate for fun. The certificate indicates the time and date when the image was uploaded to the server as well as the cell location, the phone number of the user and assigns an identification number to the photo. The certificate is sent to the user as a print and stored on a server for 14 days. People will most likely use the fun certification on holiday to "proof" that they were at certain locations.
- Consumer/Proof (see figure below)
   Users can proof a situation with this application. In addition to the consumer/fun version, the time and location are registered more precisely and in a way that cannot be manipulated. A digital watermark is added to the image which ensures that the image cannot be altered after the certification. The image is stored for 60 days on a secure server and the user receives a print.
- Business/Proof
   In addition to the consumer/proof version, the location is determined using the most accurate technology available (e.g. GPS) and the time when an image was taken is determined exactly, leaving no way for manipulation. The certified image will be stored on a secure server for 180 days.
- Business customized services
   Customized certification services can be used in many business situations, ranging from medical services (e.g. for US surgeons fearing law suits from patients) over construction projects (e.g. for architects certifying the project progress) to law enforcement (e.g. forensic).

We expect a huge number of situations where our four levels of certification services can be used. For the standardised services in the consumer and business/proof field, users are likely to find ways of using the service that we cannot even imagine yet. The example uses given below are just a small portion of what is possible.

Some examples are given below:
- Transport documentation (Business Proof)
   E.g. for transport of valuable goods: Taking (certified) pictures and transferring them to security company and image archive.
   Accident documentation (Consumer Proof)
   Taking certified images of place of accident and transferring them to insurance or police office, offering archiving (image database) for such pictures.
- Taking images for speed tickets (Business customised services) Replacing existing film-based system with digital camera and wireless imaging based system.

The technical concept of the certification services is explained by means of the highest level certification, that is the business certification.

For examples, a car accident happened. The customer who is involved wants to have a certified image of the place of accident.

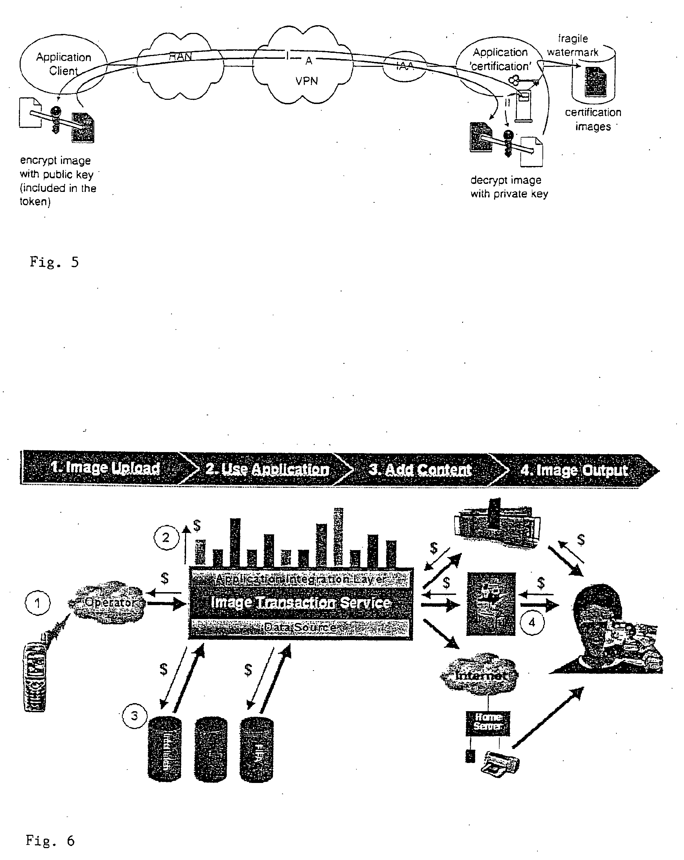

The procedure is explained in detail in Fig. 4, where the data transmission channels are represented by Roman numbers.

The customer connects to the ITS requesting certification services (I). The ITS creates an IAA to link the client application and the certification service. The customer has to ask for a token before he takes the picture (IX). The token is sent through the IAA and a copy is kept by the application for later authentication.

This token has a limited lifetime - let us assume about 5 minutes - and enables the client application to take a picture within these 5 minutes. Due to this limited lifetime, it can be assured that the picture was taken during a certain timeframe. The MT actual time cannot be used because it may be set false. Both, the token and the image are encrypted with a public key, which has been provided by the application together with the token. On the MT, it has to be made sure that the image is immediately encrypted with the token after the picture has been taken and to make it impossible the exchange this picture with another picture, which has been taken earlier.

After the taken picture is encrypted, it is sent to the application through IAA (II). The application creates a template with the information included in the token and the time and position of the exposure, as well as the customer's name. Location information, as well as the time, may be achieved from ITS (VII) as explained in the postcard services. After that this template is merged with the decrypted image.

The resulting certification image must be protected against manipulation; this may be done with a kind of fragile watermarking. The protected image is then stored in a certification database and the required login information (link, account and password) is sent to the MT by an encrypted SMS.

If being desired, the protected picture may also be sent to a photofinisher for printing and shipping to the customer (III). The mechanism to get the customer's address is the same as in the event book application.

The level of certification services defines not only the level of security, but also the time of how long a certification image is kept on the certification database for later reuse.

For lower level certification (fun certification), no token or encryption is required.

For highest level certification all data must be encrypted for transmission and therefore a public key encryption (cf. RSA) is used. The public key has not to be encrypted since it is public. But for decryption the private key is required that is only known to the server, which is delivering the public key.

The procedure is shown in detail in Fig, 5.

The application client receives a public key (included in the token) (I). The image is encrypted using this key and then sent to IAA/application (A).

The application decrypts the encrypted image with the private key (II) and checks the image for manipulation. If the image is authentic, it can be merged with the template (see above) and the result must be protected with a fragile watermark. This fragile watermark is not resistant against any image manipulation. By the means of that, attempt cheating with manipulation may be detected in comparison with an original image.

The most critical issue in this aspect of the invention. The whole service must be protected against manipulation. The encrypted transmission, as shown above, requires the mentioned key servers and the mechanism to send the encrypted private key to the application server. The application service as well must support the public key encryption.

Furthermore, the client application must ensure that the exposure time is within the token lifetime. Especially the use of already stored images must be prevented.

The public key encryption must support an authentication check to detect image manipulation during transmission.

The used watermark must be fragile, that means it must enable every kind of image manipulation without requiring a comparison with the original image. This gives the possibility to distribute a tool with which a customer (e.g. insurance receiving an accident certification card from a client) can do the authentication check. AlpVision already uses kind of watermarking techniques and sells such a little tool called PhotoCheck (this works even with printed and scanned images!).

The certification database, where the certification cards are stored, must provide a limited accessibility. The customer must be able to download, send or print his certification card again. To identify the customer, he must get a login and an initial password during the certification service.
As the amount of data may exceed the certification service providers storing capability, it must be possible to outsource this database - maybe by using the same technologies as with localised content.
But still, every certification data transmission has to be made secure!

The Image Transaction Service (ITS) connects the different partners of the mobile imaging concept and manages the data flow and transaction handling within the concepts of this invention. The partners connected via ITS are:
- operators who enable their customers to upload images to the internet and use the imaging service
- content providers who offer content that can be combined with images (e.g. photo frames from Walt Disney)
- application service providers who allow customers to do something with their images (e.g. create a photo calendar)
- photofinishers (central labs and retail photofinishers) who offer prints or print-related products (e.g. photo books)

The Figure 6 above shows the image data flow (bold type arrows) and the money flow (thin arrows) through the ITS. The end-customer billing can be either done from the photofinisher side as shown in the figure or from the operator side via phone bill. In case of photofinisher side billing, the ITS distributes the incoming money to wireless application service providers, content providers and operators based on a pre-defined revenue split scheme. The output network significantly improves the attractiveness of the concept of this application since it adds physical products to the service offerings and leverages printing techniques and well established connections with photofinishers world-wide.

## Claims

1. Method for improving digital image data recorded by a mobile image data recording/transmitting device, e.g. a mobile phone which image data receiving and transmitting function, wherein an image is received by an image receiving portion of said mobile data transmitter device; wherein said image is transferred digital image data to be transmitted; wherein said transmitted image data is received by a receiving device; wherein the received digital image data are recorded e.g. on print paper by means of a photo printer, a data storage device or the like; wherein the digital image data to be transmitted are intermediately transmitted to an image transmission device (ITD; ITS) for modifying the image data.

2. Method according to claim 1, wherein the modification of image data is done for quality improvements of the digital image data before the data is recorded, e.g. on print paper, on photo-CD or the like.

3. Method according to claim 2, wherein the digital image data to be recorded are subjected to at least one of the following quality improvement processes:

4. Method according to one of claims 1 to 3, wherein the mobile image data recording/transmitting device (MIRT device) is connected to a digital camera which transfers digital image data to the MIRT device, wherein the digital image data being transmitted to the image transaction device (ITD; ITS) to be modified.

5. Method according to one of claims 1 to 4 wherein a connection between the MIRT device and the image transaction device (ITD; ITS) is arranged, the image transaction device is sending at least one of digital data including at least one of the following subsets of data:
- at least one application data field for the application of a user;
- at least one service providing data field for selecting a service by a user;
- at least one location identification data field for the identification of a service target location;
- at least one user identification data field for enabling the user to identify himself;
- at least one user billing identification data field for enabling a user provide billing data.

6. Method according to claim 5, wherein the at least one of subsets is received by the MIRT device as a voice data field or a voice and/or data field, in particular at least one interactive mask data field.

7. Method according to one of claims 1 to 6, wherein, when the transmission of digital image data is disturbed and/or interrupted, the image transaction device (ITD, ITS) transmits a signal to the MIRT device to at least partially repeat the transmission or reinitiate the transmission.

8. Method according to one of claims 1 to 7, wherein, when the transmission of image data is disturbed and/or interrupted, the image transaction device (ITD, ITS) does not transmit an affirmative signal to the MIRT device, or the MIRT device does not receive a set signal after the end of a transmission, and the MIRT device thus receives control information that the transmission was not successful.

9. Method according to one of claims 1 to 8, wherein the MIRT device records and/or transmits a particular image to the image transmission device and the MIRT device and/or the image transaction device, respectively, are linking prove information with respect to a time and/or a date and/or a date and/or a location with the image data to be recorded, indicating the time/date/location of capturing of the particular image by the MIRT device and/or the time/date of receiving the image data by the image transaction device, respectively.

10. Method according to claim 9, wherein the prove information is recorded together with the image data on a recording medium, in particular print paper or photo print paper for prove purposes.

11. Method according to one of claims 8 or 9, wherein the image data of the particular image and the information is stored for a certain time period on a secure server memory, which is not susceptible to manipulation.

12. Method according to one of claims 9 to 11, wherein the sets of digital data are including at least one subset of data to request the image transaction device to provide image data records with different prove security levels.

13. Method according to one of claims 1 to 12, wherein the MIRT device includes a control means for covering digital image data to automatically transmit image data to be modified and/or recorded.

14. Method according to claim 13, wherein the MIRT device includes an activation means for activating the automatic image data transmission and modification and/or record, in particular said activation means is a push button or the like.

15. Method according to one of claims 1 to 14, wherein the MIRT device transmits digital image data which is combined with supplementary data, and the combined data is recorded.

16. Method according to claims 1 to 15, wherein the MIRT device transmits a service order and digital image data to the image transaction device and corresponding to a billing rate for the service order, the image transaction device transmits billing data to the MIRT device, particularly for information purposes.

17. Method according to claim 16, wherein the billing data is received by the MIRT device and the costs corresponding to the billing data are subtracted from a prepaid amount of money stored on a prepaid device, in particular a SIM-card.

18. Method according to claim 16, wherein after confirmation, customer account identifications are transmitted from the MIRT device to the image transaction device and after a corresponding electronic payment action has been completed, the ordered service is complied with.

19. Method according to one of claims 1 to 18, wherein based on an identification of a MIRT device, customer identification data is retrieved from a data base, in particular a data base of a net provider, to obtain customer related information, in particular shipment information, billing information or the like.
